# EUROPEAN PATENT APPLICATION

(11) **EP 4 749 176 A1**
(43) Date of publication of application: **27.05.2026**
(21) Application number: 24383259.9
(22) Date of filing: 21.11.2024
(51) Int. Cl.: F17C 13/06

(54) **SECURING STRUCTURE FOR CONTAINER CLOSURE**

(71) Applicant: Airbus Operations, S.L.U., 28906 Getafe, Madrid (ES)
(72) Inventor: MOLINA PARGA, Alberto, 28906 Getafe - Madrid (ES); VEGUILLAS FUSTEL, José María, 28906 Getafe - Madrid (ES); PINTOR, Antonio Francisco, 28906 Getafe - Madrid (ES)
(74) Representative: Elzaburu S.L.P.

(57) **Abstract**

Securing structure for container closure (401) configured to hinder a complete extraction of a container closure (401) from a container outlet (402) in the event of a deformation of the outlet (402) and/or of the closure (401), the structure comprising: an external ring (200) configured to be placed radially around an outlet (402); a retaining ring (300) configured to be placed within the external ring (200) and to axially abut against an abutment surface (201) of the external ring (200), wherein the retaining ring comprises: an external main body (301) and; an internal wedge element (302) configured to be tightly fitted into the external main body (301), and; a retaining plate (100) configured to axially cover the container outlet (402) in an axial direction of the container outlet (402), wherein the retaining plate (100) is configured to be attached to the external ring (200) by means of anchoring elements (101).

## Description

### Technical field

The present invention is directed to a securing structure for container closure, wherein the securing structure is intended for hindering the accidental opening and/or collapse of the container (or tank) closure, due to an increase in the pressure value inside the container.

Moreover, in case the container closure is inevitably released due to the increase of pressure inside the tank, the securing structure of the present invention impedes that the container closure be projected towards any surrounding person or object, thereby providing a crucial security system that enhances the safety level of any industrial facility and/or vehicle comprising pressurized tanks or containers.

This invention is preferably applicable in the field of designing, manufacturing and operation of industrial facilities and/or vehicles such as aircrafts, comprising pressurized containers or tanks, in particular in hydrogen-powered aircrafts.

### Background of the invention

In the context of hydrogen powered (H2-powered) aircraft development, large tanks of fuel need to be accommodated inside the aircraft.

Pressurized containers or tanks frequently undergo important variations in the pressure value of the gas contained therein, due to sudden variations of ambient conditions such as temperature.

In some exceptional situations, container closures such as pressure valves might be accidentally released from the container, for example due to deformations in the geometry of the container or closure, such as minor deformations in the coupling threads used to attach the closures to the container.

A sudden release of the container closure can cause that the container closure to be projected towards any surrounding object or person, thereby posing an important risk to the integrity of the facility within which said container is placed and/or to the physical integrity of the facility operators.

Furthermore, a sudden release of the container closure can cause that the pressurized gas inside the container be jetted out causing harm to persons and/or equipment by its nature or because of the sudden increase of pressure around the container, or increasing risks such as fire or explosion risks.

### Summary of the invention

With the aim of providing a solution to the abovementioned problems, the present invention refers to a securing structure for container closure.

The securing structure for container closure, according to the present invention, is configured to hinder and/or impede a complete extraction of a container closure (such as a nozzle, a plug or valve) from a container outlet in the event of a deformation of the outlet and/or a deformation of the closure. This deformation may be caused by temperature variations that lead to pressure increases inside the container or tank. In particular it may be caused by deformations after multiple cycles of pressurization/depressurization of the container.

The securing structure for container closure, object of the present invention, comprises:
- an external ring configured to be placed radially around an outlet of the container;
- a retaining ring configured to be placed within the external ring and to be placed radially between the outlet of the container and the external ring, wherein the retaining ring comprises:
   ∘ an external main body and;
   ∘ an internal wedge element configured to be tightly fitted into the external main body, the internal wedge element comprising an external conical surface faced towards a complementary internal conical surface of the external main body, wherein the retaining ring is configured such that, in use, the external conical surface of the internal wedge element is convergent towards the container, and;
- a retaining plate configured to axially cover the container outlet, wherein the retaining plate is configured to be attached to the external ring by means of anchoring elements.

Thanks to the securing structure for container closure described above, in cases where the closure could run out from the container outlet (e.g. due to a deformation of the container outlet), the closure is stopped by the retaining plate, thereby the closure being prevented from being projected against any surrounding object or person.

Moreover, in said cases of deformation, when the substance or fluid contained inside the container flows out from the container, said fluid is prevented from directly impacting any surrounding object or person, since the fluid jet would first collide against the retaining plate, thereby deviating its direct trajectory and losing energy.

According to a possible embodiment of the invention, the retaining ring is configured to axially abut against an abutment surface of the external ring. Alternatively, the retaining ring may be configured to be tightly fitted into the external ring.

In a preferred manner, the internal wedge element of the retaining ring is configured to be tightly fitted into the external main body of the retaining ring.

According to a possible embodiment of the present invention, the retaining plate is configured to be placed in contact with the container closure.

According to another possible embodiment of the present invention, the retaining plate is configured to be placed such that there is a gap between the closure and the retaining plate, wherein said gap between the retaining plate and the closure is smaller than the axial dimension of the closure. Thus, in case of deformations provoking that the closure be displaced outwardly from the outlet, the small gap does not allow that the closure be completely extracted from the outlet of the container, while permitting a partial outward displacement of the closure allowing a controlled pressure decrease inside the container or tank. Thus, the pressure level inside the tank is controlled and is kept under a critical pressure level. The gas that has flown out from the container can be subsequently evacuated from the surrounding environment (e.g. by means of a ventilation or a gas extraction system).

According to a possible embodiment of the present invention, the external ring is configured to be placed within a support element of the container. The external ring may be arranged at a longitudinal end of the container (when the corresponding outlet of the container is placed at such longitudinal end of the container). The support element allows the container to be stably supported on a supporting plate.

Furthermore, according to a possible embodiment of the present invention, the anchoring elements comprise anchoring bolts. Thus, a plurality of anchoring bolts allow to attach the retaining plate to the external ring, according to a longitudinal direction of the securing structure for container closure.

### Brief description of the drawings

As a means for better understanding at least one embodiment of the present invention, the following set of drawings is introduced by way of schematic illustration and in a non-limitative manner.
Figure 1: Shows a schematic perspective exploded view of the securing structure for container closure, according to a possible embodiment of the present invention.
Figure 2: Shows a schematic perspective section view of the securing structure for container closure of Figure 1, in a mounted position.
Figure 3: Shows a schematic planar section view of the securing structure for container closure of Figure 2.

### Detailed description

The present invention, as already introduced, refers to a securing structure for container closure (401).

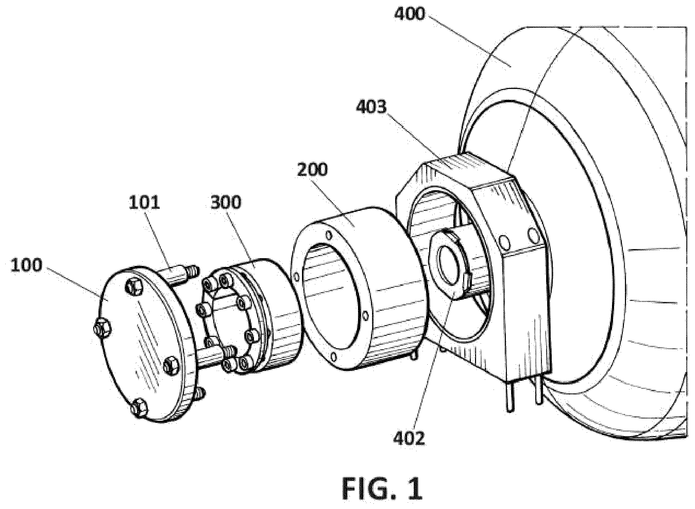

Figure 1 schematically depicts an exploded perspective view of a possible embodiment of the securing structure of the present invention.

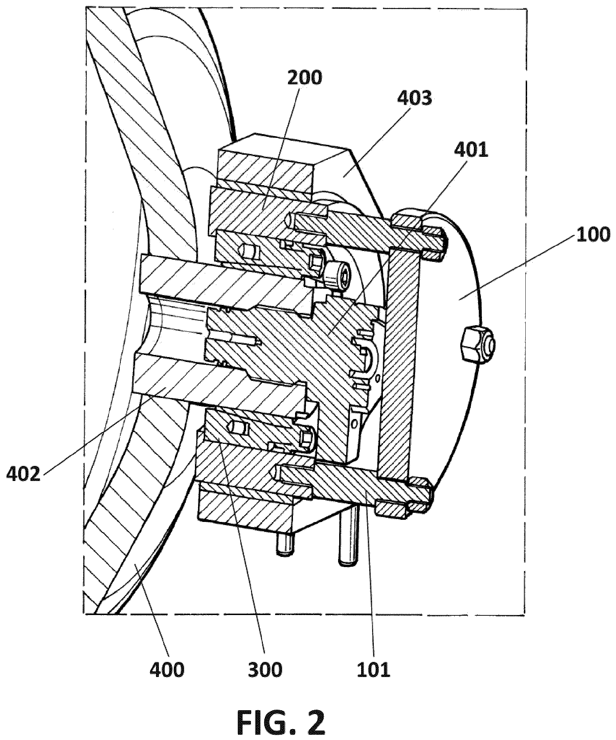

Figure 2 schematically depicts a perspective section view of the securing structure of Figure 1, mounted on a container outlet (402) wherein a closure (401) (such as a valve) is placed at the container outlet (402).

As shown in Figure 1 and Figure 2, a container (400) or tank comprises an outlet (402) for allowing the container (400) be filled with a substance (such as a gas) and for allowing the substance flow out from the interior of the container (400).

The container (400) comprises a support element (403) placed around the outlet (402), for attaching or placing the container (400) upon a supporting plate (not shown). This support element (403) is configured to allow possible deformations of the container (400) due to variations in the pressure level of the substance inside the container (400).

The container (400) is configured to be closed or sealed by means of one or more closures (401) (such as valves, nozzles or plugs) respectively placed at one or more corresponding outlets (402) of the container (400).

The securing structure for container closure (401), object of the present invention, comprises a retaining ring (300) configured to be placed around the outlet (402) of the container (400).

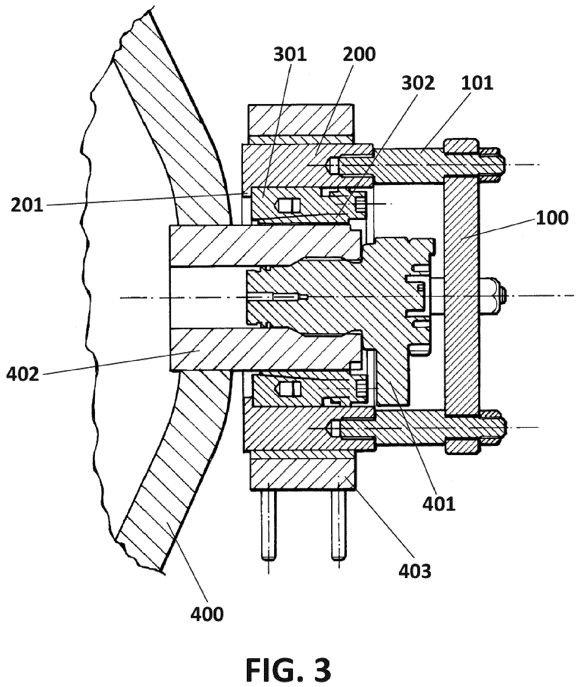

As more clearly shown in Figure 3, the retaining ring (300) comprises an external main body (301) and an internal wedge element (302) with an external conical surface facing the external main body (301). The retaining ring (300) is configured such that the external conical surface of the internal wedge element (302) is convergent towards the container (400) body. The reason for such configuration is explained below.

The wedge element (302) is configured to be tightly fitted into the main body (301) of the retaining ring (300).

The retaining ring (300) is configured to be placed within an external ring (200).

According to the embodiment shown in the Figures, the external ring (200) is placed within the support element (403).

The external ring (200) comprises an abutment surface (201) configured to accommodate the retaining ring (300) and to, eventually, exert an axial pressure upon the retaining ring (300), as will be explained below.

The securing structure for container closure (401), object of the present invention, comprises a retaining plate (100) configured to axially cover the container outlet (402).

The retaining plate (100) is configured to be attached to the external ring (200) by means of anchoring elements (101) (such as bolts, rods or screws).

The retaining plate (100) is configured to axially cover the outlet (402) of the container (400), i.e. to be disposed next to the outlet (402) of the container (400), according to an axial direction thereof.

The retaining plate (100) may be disposed next to the outlet (402) of the container, such that there is a gap or space between the closure (401) (inserted or placed within the outlet (402)) and the retaining plate (100). In this case, the gap or space between the retaining plate (100) and the closure (401) is smaller than the axial (or longitudinal) dimension of the closure (401) inserted in the outlet (402).

In case there is an increase in the pressure level inside the container (400) that provokes a deformation of the outlet (402) and/or a deformation of the closure (401) (e.g. a deformation of the thread) that leads to the closure (401) being axially displaced outwards from the outlet (402), the retaining plate (100) impedes that the closure (401) completely runs out from the outlet (402) and be projected towards surrounding objects or persons.

Moreover, as the axial displacement of the closure (401) is blocked by the retaining plate (100), the substance or fluid inside the container (400) is prevented from being directly jetted towards any surrounding person or equipment.

In the abovementioned cases, where the closure (401) is axially displaced towards the retaining plate (100), the axial force exerted by the closure (401) against the retaining plate (100) is transmitted by the anchoring elements (101) to the external ring (200), and further by the abutment surface (201) to the retaining ring (300), and more particularly, to the main body (301) of the retaining ring (300).

Furthermore, by means of the wedge element (302) of the retaining ring (300) (whose external conical surface is convergent towards the container (400)), any axial force transmitted to the main body of the retaining ring (300) is partially converted into a radial force exerted by the wedge element (302) against the outlet (402) of the container (400), this radial force being transmitted to the closure (401).

Therefore, the higher is the axial pressure/force exerted by the closure (401) against the retaining plate (100), the higher is the radial force exerted against the outlet (402) by the wedge element (302) of the retaining ring (300). Thus, a retaining effect is achieved by means of the securing structure of the present invention, this retaining effect hindering and/or impeding that the container closure (401) completely runs out and/or be completely extracted from the container outlet (402).

## Claims

1. Securing structure for container closure (401) configured to impede a complete extraction of a container closure (401) from a container outlet (402), wherein the securing structure for container closure (401) is **characterized in that** it comprises:
- an external ring (200) configured to be placed radially around an outlet (402) of the container (400);
- a retaining ring (300) configured to be placed within the external ring (200) and to be placed radially between the outlet (402) of the container (400) and the external ring (200), wherein the retaining ring (300) comprises:
∘ an external main body (301) and;
∘ an internal wedge element (302) the internal wedge element (302) comprising an external conical surface faced towards a complementary internal conical surface of the external main body (301), wherein the retaining ring (300) is configured such that, in use, the external conical surface of the internal wedge element (302) is convergent towards the container (400);
- a retaining plate (100) configured to axially cover the container outlet (402) in an axial direction of the container outlet (402), wherein the retaining plate (100) is configured to be attached to the external ring (200) by means of anchoring elements (101).

2. Securing structure for container closure (401) according to claim 1, **characterized in that** the retaining ring (300) is configured to axially abut against an abutment surface (201) of the external ring (200).

3. Securing structure for container closure (401) according to claim 1 or 2, **characterized in that** the internal wedge element (302) of the retaining ring (300) is configured to be tightly fitted into the external main body (301) of the retaining ring (300).

4. Securing structure for container closure (401) according to any preceding claim, **characterized in that** the retaining plate (100) is configured to be placed in contact with the container closure (401).

5. Securing structure for container closure (401) according to any of the claims 1 to 3, **characterized in that** the retaining plate (100) is configured to be placed such that there is a gap between the closure (401) and the retaining plate (100), wherein said gap between the retaining plate (100) and the closure (401) is smaller than the axial dimension of the closure (401).

6. Securing structure for container closure (401) according to any preceding claim, **characterized in that** the external ring (200) is configured to be placed within a support element (403) of the container (400).

7. Securing structure for container closure (401) according to any preceding claim, **characterized in that** the anchoring elements (101) comprise anchoring bolts.
